(19) Europäisches Patentamt

European Patent Office

Office européen des brevets

(11) **EP 1 215 029 B1**

(12) **EUROPEAN PATENT SPECIFICATION**

(45) Date of publication and mention
of the grant of the patent:
**19.05.2004   Bulletin 2004/21**

(51) Int Cl.⁷: **B29C 45/50**

(21) Application number: **00830818.1**

(22) Date of filing: **13.12.2000**

(54) **A linear and rotary actuator for mixing and pressing in molding machines**

Eine Linear- und Drehantriebsvorrichtung zum Mischen und Pressen in Formmaschinen

Un dispositif d'entraînement linéaire et rotatif pour mélanger et presser dans des machines à mouler

(84) Designated Contracting States:
**AT BE CH CY DE DK ES FI FR GB GR IE IT LI LU
MC NL PT SE TR**
Designated Extension States:
**AL LT LV MK RO SI**

(43) Date of publication of application:
**19.06.2002   Bulletin 2002/25**

(73) Proprietor: **Phase Motion Control S.r.l.**
**16141 Genova (IT)**

(72) Inventor: **Venturini, Marco**
**16145 Genova (GE) (IT)**

(74) Representative: **Monti, Umberto**
**Via Washington 48**
**20146 Milano (IT)**

(56) References cited:
**EP-A- 0 723 848**

- **PATENT ABSTRACTS OF JAPAN vol. 18, no. 229
(M-1598), 26 April 1994 (1994-04-26) -& JP 06
023812 A (TOYO MACH & METAL CO LTD), 1
February 1994 (1994-02-01)**
- **PATENT ABSTRACTS OF JAPAN vol. 16, no. 363
(M-1290), 5 August 1992 (1992-08-05) -& JP 04
113821 A (AMADA CO LTD), 15 April 1992
(1992-04-15)**

**Description**

The present invention relates to a linear and rotary actuator, particularly for use in injection molding machines.

Many applications require actuators with two degrees of freedom, in particular linear and rotary actuation on the same device.

In particular, injection molding machines need an injector device which consists of a long screw, with a long pitch, similar to an Archimede's screw, which can both rotate and translate inside a tight fitting cylindrical mandrel.

The injection process consists of, at first, rotating the screw while solid material, in the shape of pellets, is loaded through a hole near the base of the screw. The rotation of the screw compresses the pellets forward while melting them through friction with the surface of the cylinder, which may or may not be heated. When the injection material has been properly plasticized, the screw is thrust forward inside the cylinder, thus acting as a piston, so that the molten material is ejected into the die through an orifice at the tip of the cylinder.

In prior art known devices, the rotation of the screw is obtained with an hydraulic motor or an electric motor with a gearbox reduction, while the linear motion is obtained with an hydraulic piston.

For example, US-A-5 714 176 discloses a plastic injection molding machine comprising a servo motor and piston-cylinder unit moved by a hydraulic pump.

JP 06 023812, JP 04 113821 and EP-A-0 723 848 disclose two-motors linear actuators in which a single direction ball screw with a single full load nut carries a spline and the two motors perform the melting-mixing and the injection separately. Each of them needs to be rated for the full power of each independent process and no suggestion is given to combine the motions of the two drives. Additional examples of prior art injection molding machines are disclosed in US-A-3 810 728, US-A-5 935 494 and US-A-6 068 810.

Both operations, i.e. plastification through rotation of the screw, and injection by linear motion of the screw typically require a considerable power, in fact, they are the most significant power consumption of injection molding machines. The power required by the two operation is generally similar and in most cycles the two actions do not overlap.

Over the last few years a trend was developed towards the concept of all-electric injection molding machines, i.e. direct actuation of the injection screw by electric actuators instead of hydraulic or electro-hydraulic actuators. Such a machine is expected to perform with higher efficiency, to be free from pollutants and to be able to press clean parts without smearing them with hydraulic fluid, and to be more accurate and controllable thus making more complex and difficult moulds feasible.

However the known injection devices using a single electric motor are generally not satisfactory since the linear force required for the injection is very large and it generally exceeds the load capacity of standard ball lead screws, and the electrical power which must be controlled is large both for plastification and for injection thus requiring two large and expensive inverters.

It is an object of the present invention to realise an improved rotary-linear actuator for injection machines that overcomes the above illustrated drawbacks of the known art.

This object is achieved through a rotary-linear actuator as claimed in claim 1.

The actuator of the invention is an integrated, rotary-linear actuator which can perform both rotation and thrusting by adding the power of two electrical motors and with inverters rated only half of the total power required of each phase independently. More precisely, the actuator provides for two degrees of freedom that are obtained by independently controlling two equal rotary motors, each driving a nut of a single leadscrew, in which the two nuts operate on portions of the leadscrew having opposite direction of thread, and in which the nuts are free to rotate but fixed axially.

The actuator of the present invention provides for a single leadscrew operated with two rotary units each carrying half of the total thrust required, thus allowing the use of a smaller size leadscrew for a given thrust.

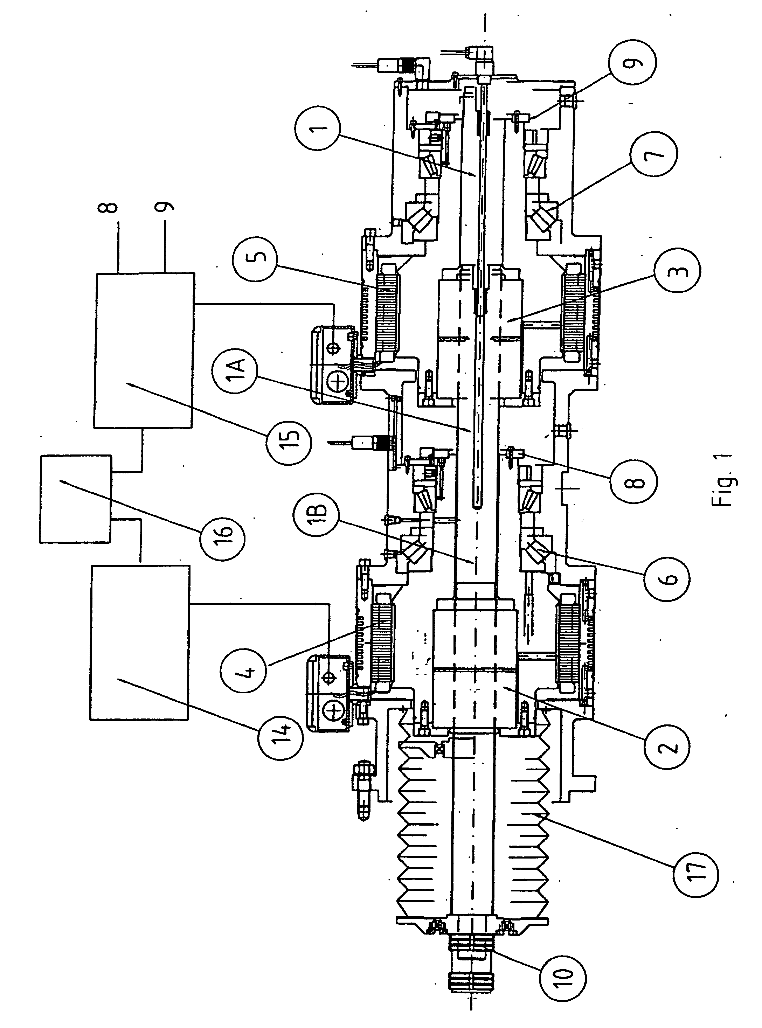

The invention will now be disclosed with reference to the attached drawing sheet in which Fig. 1 shows a cross section of a rotary linear actuator according to an actually preferred embodiment of the present invention.

With reference to Fig. 1, an actuator according to a preferred embodiment of the invention comprises an elongated casing 10 housing a lead screw 1 provided with two longitudinally spaced threaded portions 1A, 1B, each engaging and being supported by one of two axially spaced apart nuts or nut members 3, 2 that in turn are mounted inside the rotors of two axially spaced apart ring-shaped motors 4, 5 having an equal nominal or rated torque. All the above mentioned components, namely the (lead)screw 1, the nuts and the rotors, are coaxial with the casing, while the electric motors 4, 5 shaped as rings are mounted on the nuts of said lead screw, and insist on the same bearings of the nuts so that no other mechanical transmission is necessary.

The motors and the coaxial nuts are free to rotate about the common axis, but are restrained in the axial direction by means of bearing sets 6, 7.

At one end of the lead screw 1 protruding from the casing 1, a linear/rotary force coupling 10 is used to connect the actuator to the payload, typically the injection screw of a plastics injection machine. A bellow 17 protect the screw end from dust.

The threaded portions on the screw 1 have opposite directions, and more precisely in the illustrated embodiment portion 1A is a clockwise threaded portion and portion 1B is a counterclockwise threaded portion. Each threaded portion 1A, 1B extends at least as long as the required stroke plus the length of the nut. The lead screw 1 can be either a ball or roller screw according to the load capacity required, which is machined with the threaded portions on two sections thereof.

The motors 4, 5 can be realised in any suitable technology and in this preferred example they are two brushless PM servo motors.

Sensors 8, 9 are (or can be) provided that are adapted to generate signals containing position information relating to the screw 1 for implementing a feedback control for each motor. The two motors 4, 5 are driven by two variable speed motor drives or inverters 14, 15 and a control unit 16 (all schematically shown in the Figure). Preferably the lead screw 1 is of the roller type in order to maximise the load carrying capacity and the machine lifetime.

The disclosed actuator can operates in accordance with any combination of the following two modes:

Rotary actuation: both motors 4,5 are driven at the same speed, in the same rotation direction. As a consequence, the leadscrew is forced to rotate synchronously with the two motors, as any skidding of the screw with respect to any of the two units is prevented by the stiffness of the system of bearings and the axial stiffness of the screw. In this operational mode, the output torque equals the sum of the torque of the two motors, whereby two drives with half the power rating of that required on the actuated axis are required.

Translation, or injection, mode: in this mode, the motor 5, which insists on the clockwise portion of the leadscrew, is rotated counterclockwise as seen from the actuator end; while the motor 4, which insists on the counterclockwise direction from the actuator end, is rotated clockwise as seen from the actuator end at exactly the same speed. In this way, the leadscrew develops an axial motion, extending out of the actuator end, and no rotary motion at all. The resulting thrust is the sum of the thrust of both units, which as before share the load and the power equally, thus realising one of the objects of the invention.

In more general terms the actuator realised according to the present invention can operate any combination of the two modes simultaneously. In this case if the speeds of motors 4, 5 are represented as ω1, ω2 respectively, and P is the leadscrew pitch, the axial and rotational speeds of the actuator are respectively:

$$Vact := \frac{\omega 1 - \omega 2}{4 \cdot \pi} \cdot P$$

$$\omega\, act := \frac{\omega 1 + \omega 2}{2}$$

where ωact is the resulting rotary speed of the actuator end and Vact is the resulting linear speed of the actuator end.

The output torque and the output thrust Tact and Fact are represented by the following system of equations:

$$Tact := T1 + T2$$

$$Fact := 2 \cdot \frac{\pi}{P} \cdot (T1 - T2)$$

where T1 and T2 are the actual torque outputs of the two motors.

Although the invention has been illustrated with reference to a preferred embodiment thereof, more generally the invention can have other applications and modifications falling within the invention scope, as will be evident to the skilled of the art.

## Claims

1. A linear and rotary actuator comprising:

   an elongated casing (10) housing a lead screw (1) provided with two longitudinally spaced threaded portions (1A, 1B) having opposite directions;
   two axially spaced apart nut members (3, 2) each engaging and supporting one of said threaded portions (1A, 1B);
   two axially spaced apart ring-shaped motors (4, 5) each comprising a rotor inside which each of said nut members (3, 2) is mounted, said motors being restrained in the axial direction by stop means (6, 7);
   means (14, 15) adapted to independently operate said motors (4, 5), and a control unit (16) controlling both said means (14, 15).

2. An actuator as claimed in claim 1 **characterised in that** said means for independently operating said motors (4, 5) comprises two variable speed motor drives or inverters (14, 15).

3. An actuator as claimed in claim 1 **characterised in that** a sensor (8, 9) is further provided for each motor for generating signals containing position information related to said screw (1) for implementing a feedback control for each of said motors (4, 5).

4. An actuator as claimed in claim 1 **characterised in that** it further provides for a coupling (10) at one end of said lead screw (1) protruding from said casing for connecting the actuator to the screw of an injection machine.

5. An actuator as claimed in claim 1 **characterised in that** said motors are brushless PM motors.

**6.** An actuator as claimed in claim 1 **characterised in that** said lead screw (1) is of the roller type.

**7.** An actuator as claimed in claim 1 **characterised in that** said stop means (6, 7) comprises bearing sets.

**8.** An actuator as claimed in claim 1 **characterised in that** said lead screw (1) comprises either a ball or roller screw which is machined with said threaded portions (1A, 1B) on two spaced sections thereof.

**Patentansprüche**

**1.** Linear- und Drehantriebsvorrichtung, umfassend:

ein langgestrecktes Gehäuse (10), in dem eine Gewindespindel (1) untergebracht ist, welche mit zwei longitudinal beabstandeten Gewindeabschnitten (1A, 1B) mit entgegengesetzten Gewinderichtungen versehen ist;
zwei axial voneinander beabstandete Gewindemutterelemente (3, 2), die jeweils mit einem der besagten Gewindeabschnitte (1A, 1B) in Eingriff stehen und dieses stützen;
zwei axial voneinander beabstandete ringförmige Motoren (4, 5), von denen jeder einen Rotor enthält, in dessen Innerem jeweils eines der besagten Gewindemutterelemente (3, 2) befestigt ist, wobei die besagten Motoren in axialer Richtung durch Anschlagmittel (6, 7) eingeschränkt sind;
Mittel (14, 15), die eingerichtet und ausgelegt sind, die besagten Motoren (4, 5) unabhängig voneinander zu betreiben, und eine Steuereinheit (16), die beide besagten Mittel (14, 15) steuert.

**2.** Antriebsvorrichtung wie in Anspruch 1 beansprucht, **dadurch gekennzeichnet, dass** besagte Mittel zum unabhängigen Betreiben der besagten Motoren (4, 5) zwei regelbare Motorantriebe oder Wechselrichter (14, 15) umfassen.

**3.** Antriebsvorrichtung wie in Anspruch 1 beansprucht, **dadurch gekennzeichnet, dass** für jeden Motor weiter ein Sensor (8, 9) vorgesehen ist, zum Erzeugen von Signalen, die Positionsinformationen bezüglich der besagten Spindel (1) enthalten, um einen Regelkreis für jeden der besagten Motoren (4, 5) zu implementieren.

**4.** Antriebsvorrichtung wie in Anspruch 1 beansprucht, **dadurch gekennzeichnet, dass** er an einem Ende der besagten Gewindespindel (1), das aus dem besagten Gehäuse herausragt, zusätzlich ein Anschlussstück (10) bereitstellt, um die Antriebsvorrichtung mit der Schraube einer Spritzgießmaschine zu verbinden.

**5.** Antriebsvorrichtung wie in Anspruch 1 beansprucht, **dadurch gekennzeichnet, dass** die besagten Motoren bürstenlose PM Motoren sind.

**6.** Antriebsvorrichtung wie in Anspruch 1 beansprucht, **dadurch gekennzeichnet, dass** die besagte Gewindespindel (1) vom Rollen-Typ ist.

**7.** Antriebsvorrichtung wie in Anspruch 1 beansprucht, **dadurch gekennzeichnet, dass** das besagte Anschlagmittel (6, 7) Lagersätze umfasst.

**8.** Antriebsvorrichtung wie in Anspruch 1 beansprucht, **dadurch gekennzeichnet, dass** die besagte Gewindespindel (1) entweder eine Kugelgewinde- oder eine Rollenspindel umfasst, die in zwei voneinander beabstandeten Teilbereichen mit den besagten Gewindeabschnitten (1A, 1B) gefertigt ist.

**Revendications**

**1.** Dispositif d'entraînement linéaire et rotatif comprenant :

un carter allongé (10) recevant une vis mère (1) comportant deux parties filetées espacées dans le sens longitudinal (1A, 1B) ayant des directions opposées ;
deux éléments d'écrou espacés dans le sens axial (3, 2), chacun s'engageant avec et supportant l'une desdites parties filetées (1A, 1B) ;
deux moteurs en forme de bague espacés dans le sens axial (4, 5), chacun comprenant un rotor à l'intérieur duquel est monté chacun desdits éléments d'écrou (3, 2), lesdits moteurs étant limités dans la direction axiale par des moyens d'arrêt (6, 7) ;
des moyens (14, 15) adaptés pour faire fonctionner de manière indépendante lesdits moteurs (4, 5), et une unité de commande (16) destinée à commander lesdits deux moyens (14, 15).

**2.** Dispositif d'entraînement selon la revendication 1, **caractérisé en ce que** lesdits moyens destinés à faire fonctionner lesdits moteurs (4, 5) de manière indépendante comprennent deux inverseurs ou entraînements motorisés à vitesse variable (14, 15).

**3.** Dispositif d'entraînement selon la revendication 1, **caractérisé en ce qu'**un capteur (8, 9) est en outre fourni sur chaque moteur afin de générer des signaux contenant une information de position concernant ladite vis (1) pour mettre en oeuvre une commande d'asservissement pour chacun desdits moteurs (4, 5).

4. Dispositif d'entraînement selon la revendication 1, **caractérisé en ce qu'**il comporte en outre un accouplement (10) situé à une extrémité de ladite vis mère (1) en saillie à partir dudit carter afin de connecter le dispositif d'entraînement à la vis d'une machine à injection.

5. Dispositif d'entraînement selon la revendication 1, **caractérisé en ce que** lesdits moteurs sont des moteurs MP sans balai.

6. Dispositif d'entraînement selon la revendication 1, **caractérisé en ce que** ladite vis mère (1 ) est de type coulissant.

7. Dispositif d'entraînement selon la revendication 1, **caractérisé en ce que** lesdits moyens d'arrêt (6, 7) comprennent des jeux de paliers.

8. Dispositif d'entraînement selon la revendication 1, **caractérisé en ce que** ladite vis mère (1) comprend, soit une vis à billes, soit une vis à galet qui est usinée avec lesdites parties filetées (1A, 1B) sur deux sections séparées de celle-ci.

Fig. 1